**Europäisches Patentamt**

**European Patent Office**

**Office européen des brevets**

(11) Numéro de publication: **0 255 448 B1**

(12) **FASCICULE DE BREVET EUROPEEN**

(45) Date de publication du fascicule du brevet:
13.06.90

(51) Int. Cl.⁵: **B62B 3/04**, B65G 1/07

(21) Numéro de dépôt: 87401788.2

(22) Date de dépôt: 30.07.87

(54) Dispositif de manutention de caisses, notamment de caisses à fond mobile permettant un conditionnement des marchandises à niveau constant.

(30) Priorité: 30.07.86 FR 8611026
11.02.87 FR 8701689

(43) Date de publication de la demande:
03.02.88 Bulletin 88/5

(45) Mention de la délivrance du brevet:
13.06.90 Bulletin 90/24

(84) Etats contractants désignés:
BE CH DE ES FR GB IT LI LU NL

(56) Documents cités:
FR-A- 2 297 787
FR-A- 2 558 442
GB-A- 724 135
US-A- 3 123 023
US-A- 4 447 041

(73) Titulaire: SOCIETE CONTINENTALE DU CARTON
ONDULE SOCAR Société Anonyme dite:, 5 - 7, Avenue
du Général de Gaulle, F-94160 Saint-Mandé(FR)

(72) Inventeur: Lacroix, Michel, 11, boulevard Gambetta,
F-18000 Bourges(FR)

(74) Mandataire: Jolly, Jean-Pierre et al, Cabinet BROT et
JOLLY 83, rue d'Amsterdam, F-75008 Paris(FR)

ACTORUM AG

## Description

La présente invention concerne un dispositif de manutention pour caisses d'emballage et en particulier destiné aux caisses à fond mobile permettant un conditionnement des marchandises à niveau constant.

On sait que les caisses à fond mobile facilitent le chargement er le déchargement des marchandises, d'où une économie de main-d'oeuvre, mais encore, elles présentent un intérêt croissant pour l'exposition directe des marchandises, notamment dans les grandes surfaces de vente où ces mêmes caisses servent ainsi au stockage, transport et exposition des marchandises.

Elles se présentent généralement sous la forme d'enveloppe parallélépipédique complètement ouverte à une extrémité, et partiellement fermée à l'autre extrémité par un rebord périphérique formé par pliage vers l'intérieur des bords inférieurs des parois de l'enveloppe, un plateau faisant office de fond mobile étant monté librement coulissant à l'intérieur et venant reposer sur ledit rebord périphérique.

Elles sont généralement suppotées par des palettes à ouverture centrale dans laquelle vient se loger le dispositif élévateur du fond mobile.

Cependant, l'utilisation des palettes à ouverture centrale est onéreuse et nécessite le remplacement des palettes de manutention classiques que les utilisateurs possèdent déjà.

L'invention vise à remédier à ces inconvénients et propose un dispositif de manutention pour lesdites caisses qui permet le conditionnement à niveau constant des caisses sans la nécessité desdites palettes à ouverture centrale et qui permet après l'opération de conditionnement de poser la caisse sur une palette classique pour sa manutention ultérieure.

L'invention a en effet pour objet dans une forme un dispositif de manutention de caisses, notamment de caisses à fond mobile permettant un conditionnement de marchandises à niveau constant, qui comporte un socle apte à supporter une palette de manutention, un dispositif élévateur du fond mobile de la caisse pour le conditionnement à niveau constant et deux fourches disposées au droit de ladite palette, à faible distance au-dessus de cette dernière, aptes à supporter la caisse par ses bords inférieurs, de part et d'autre du dispositif élévateur, lesdites fourches étant susceptibles de s'écarter latéralement pour de dégager des bords de la caisse, de manière qu'elle se pose sur la palette en vue de sa manutention ultérieure.

Selon des caractéristiques avantageuses de l'invention, le dispositif de manutention est muni de roulettes, de sorte que, grâce à son faible poids, il peut être déplacé manuellement comme un tire-pale à l'endroit d'utilisation.

Les fourches et le dispositif élévateur du fond mobile de la caisse peuvent former forment un ensemble solidaire mobile en hauteur relativement au socle du dispositif de manutention. Ceci permet de faire varier à volonté la hauteur du niveau de conditionnement de la caisse, par exemple selon la taille de la ou des personnes chargées du conditionnement ou selon le plan du transfert des marchandises à charger ou décharger.

Le dispositif de manutention peut comporter un moyen de transfert permettant de pousser la caisse le long des fourches à la verticale de la palette après conditionnement, de manière à éloigner cette dernière du dispositif élévateur pour sa dépose sur la palette. Le dispositif élévateur peut également être monté avec possibilité d'effacement automatique relativement à la palette juste avant la dépose de la caisse.

Les fourches peuvent être articulées à chacune de leur extrémité proche dudit dispositif élévateur, de manière à ce que leurs extrémités externes opposées puissent s'écarter simultanément et symétriquement l'une de l'autre suivant un plan de rotation horizontal. L'écartement des fourches assure la dépose de la caisse sur la palette qui, par la faible distance existant entre le plan de support des fourches et la surface de la palette, se pose sans choc et progressivement sur cette dernière.

Les fourches peuvent avoir une section en forme de L avec base tournée vers l'intérieur supportant ladite caisse. Les portions verticales des fourches bordent la caisse, lui assurant son positionnement latéral relativement audit dispositif élévateur.

Des éléments butées sont en outre disposés à l'arrière pour assurer le positionnement longitudinal de la caisse relativement au dispositif élévateur.

Après conditionnement de la caisse et dépose de celle-ci sur la palette, cette dernière pourra être reprise de façon classique par les fourches d'un chariot de manutention.

Le dispositif de manutention de l'invention dans une autre forme peut être intégré à une chaîne de convoyage. Dans ce cas, le socle mentionné précédemment est éliminé et les fourches sont disposées parallèles dans le sens du chemin de convoyage. La dépose de la caisse après conditionnement se fait alors directement sur la chaîne de convoyage.

Selon une autre variante de réalisation, le socle est remplacé par un ensemble-chariot à deux longerons parallèles muni de roulettes reposant au sol, les longerons encadrant la palette de manutention posée également au sol, le dispositif élévateur étant placé au sol, à l'arrière de la palette de manutention et dans son plan médian.

Selon cette variante les hauteur et largeur du plateau du dispositif élévateur étant moindres que celles de la palette, il en résulte que l'ensemble-chariot à longerons parallèles et fourches solidaires peut se déplacer le long de la palette, au-dessus du plateau du dispositif élévateur, et enfin à une position finale où la caisse se trouve à la verticale du plateau du dispositif élévateur et peut être conditionnée. Lorsque le conditionnement de la caisse est terminé, l'ensemble-chariot à longerons et fourches supportant la caisse est poussé manuellement par l'opérateur jusqu'à venir à la verticale d'une palette. A ce moment, l'opérateur commande l'écartement des fourches pour déposer la caisse sur la palette en vue de sa manutention ultérieure. En outre les longerons peuvent être solidaires l'un de l'autre par un cadre rigide à deux montants verticaux reliés par une traverse horizontale, laquelle porte lesdites fourches. Naturellement, pour s'adapter aux diverses configurations de hauteur de travail de l'opérateur et de palettes éventuellement superposées, cette traverses pourra être rendue mobile verticalement par des moyens de transmission et moteur classiques connus (par vis sans fin, vérins, etc...). Il en est de même pour l'écartement des fourches relativement à cette traverses. De plus, bien que ce ne soit pas obligatoire, pour des raisons de commodité de travail, ce dispositif peut être implanté en poste fixe sur son emplacement. A cet effet peuvent être prévues deux rainures parallèles formées au sol à la largeur desdits longerons, autorisant une translation guidée de l'ensemble-chariot. De même, on peut positionner au sol avec un léger encastrement le dispositif élévateur et éventuellement des marchepieds pour faciliter la manoeuvre de translation de l'ensemble-chariot par l'opérateur (passage dessus). On peut encore dans ce même but prévoir simplement des rails de guidage fixés parallèlement au sol, sensiblement à la largeur de la palette et dont la distance externe permet le guidage interne du roulement de l'ensemble-chariot. Les extrémités avant des rails sont avantageusement courbées vers l'extérieur pour faciliter l'entrée et le placement des palettes entre ces rails.

L'invention est décrite plus en détail ci-après à l'aide d'exemples de réalisation et en regard des dessins annexés sur lesquels:

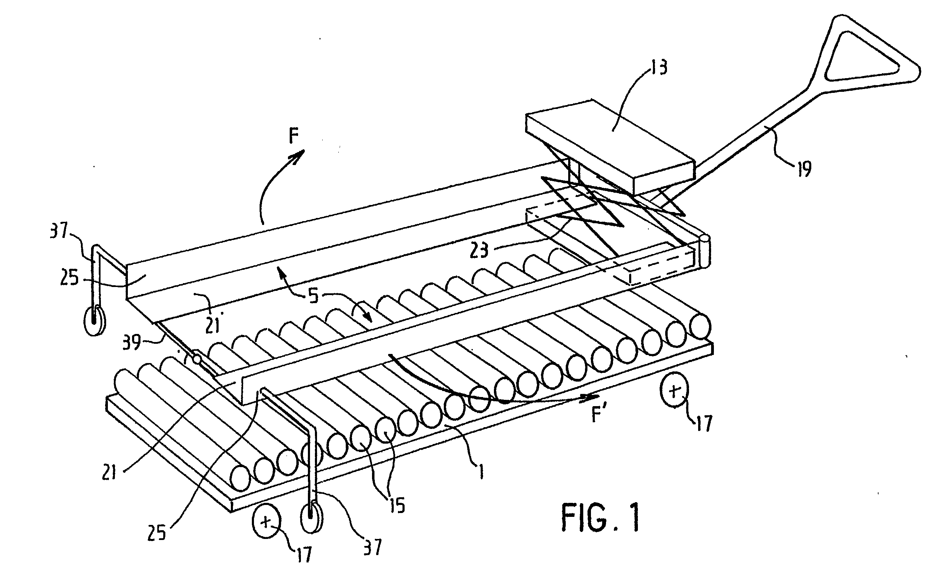

La figure 1 est une vue en perspective schématique d'un dispositif de manutention selon l'invention;

La figure 2 est une vue en coupe longitudinale médiane schématique du dispositif de manutention avec une caisse en cours de conditionnement;

La figure 3 est une vue en coupe longitudinale médiane schématique du dispositif avec une caisse en cours de dépose;

La figure 4 est une vue en perspective d'une variante de réalisation selon l'invention et

La figure 5 est une vue d'une autre variante de réalisation.

Comme représenté sur les figures, le dispositif de manutention selon une première forme de l'invention est constitué d'un socle parallélépipédique 1 destiné à supporter une palette de manutention 3, de deux fourches 5 destinées à supporter par ses bords 9 une caisse 7 à fond mobile 11 et d'un dispositif élévateur 13 du fond mobile 11 de la caisse permettant le conditionnement de cette dernière à niveau constant.

Le socle 1 comporte des rouleaux 15 en surface, perpendiculaires à l'axe médian du dispositif. Ces rouleaux 15 facilitent le positionnement et le retrait de la palette 3. Des roulettes inférieures 17 solidaires du socle 1 confèrent au dispositif la possibilité d'être déplacé à la manière d'un tire-pale par l'intermédiaire d'une poignée directrice 19.

Les fourches 5 sont articulées au bâti du dispositif avec possibilité de rotation dans un plan horizontal, parallèlement au socle 1 et de chaque côté de ce dernier, symétriquement à son axe médian (flèches F, F'). Elles sont également montées mobiles en hauteur solidairement relativement au bâti par des moyens élévateurs classiques (hydrauliques ou mécaniques) non représentés. Elles ont une section en forme de L dont l'aile horizontale de base 21 est dirigée vers l'intérieur et supporte la caisse.

Le dispositif élévateur 13 de fond mobile est en forme de boîtier de hauteur réduite au repos qui se déploie par un tringlage en accordéon 23. Le dispositif est solidaire du socle 1 mais il peut être également monté mobile sur une partie de la longueur du socle 1, avec possibilité d'effacement relativement à la palette 3 lors de la dépose de la caisse sur la palette. Dans ce cas, la longueur des fourches peut être diminuée.

Le fonctionnement du dispositif de manutention est le suivant.

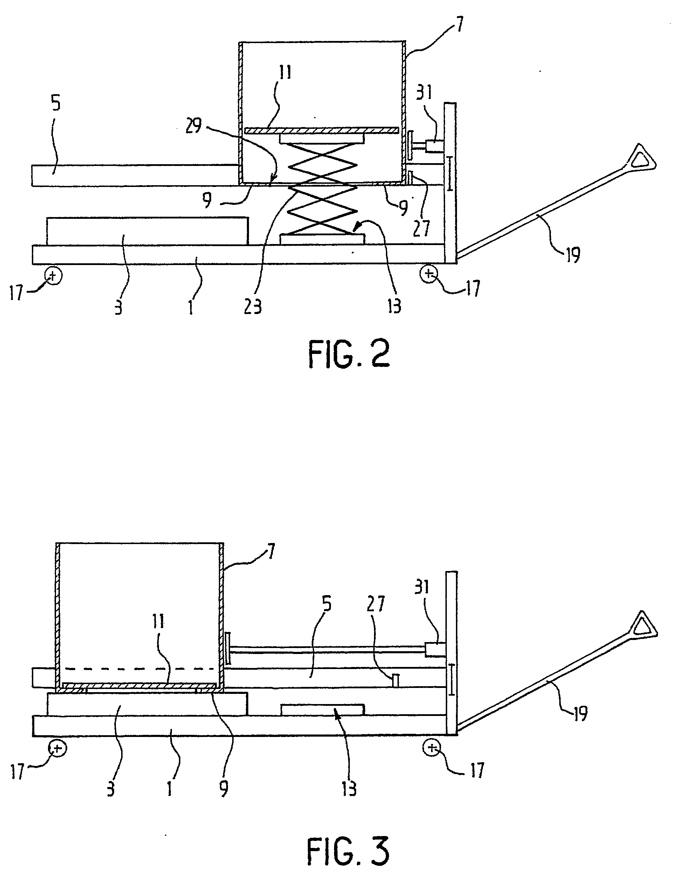

La caisse 7 est d'abord posée sur les fourches 5 (figure 2), préalablement amenées en position, parallèlement à l'axe médian du socle et sensiblement à la verticale des côtés de ce dernier. La caisse est maintenue latéralement par les ailes verticales 25 des fourches et repose par ses bords inférieurs 9 sur les ailes horizontales 21. L'ajustement longitudinal de position est assuré par de simples taquets de positionnement 27 solidaires des fourches, de manière que l'ouverture centrale 29 de la caisse soit centrée juste au-dessus du dispositif élévateur 13 en position abaissée de repos.

Les fourches 5 et le fond mobile 11 de la caisse sont élevés jusqu'à mettre à la hauteur désirée le plan de conditionnement de la caisse, hauteur à laquelle seront chargées ou déchargées les marchandises. Lorsque la caisse vient en fin de chargement, un moyen de transfert 31 (vérin ou autre) pousse la caisse 7 sur les fourches 5 jusqu'à l'amener à la verticale de la palette 3 qui est posée devant le dispositif élévateur 13.

A ce moment, ou abaisse les fourches 5 et donc la caisse 7 à faible distance au-dessus du plateau de la palette.

Les fourches 5 sont alors écartées simultanément avec rotation autour de leur axe d'articulation (flèches F, F'). Elles se dégagent donc du bord inférieur 9 de la caisse qui vient donc se déposer progressivement sur le plateau de la palette (figure 3). Une fois que la caisse est complètement posée, la palette peut être reprise de la façon habituelle par les fourches d'un chariot élévateur de manutention classique.

Dès que la caisse chargée a quitté le dispositif, les fourches 5 peuvent être ramenées en position parallèle et une nouvelle caisse être disposée sur ces dernières pour un nouveau cycle de conditionnement comme exposé ci-dessus.

On notera que en vue d'alléger la structure de l'ensemble, des jambes latérales 37 munies de roulettes au sol peuvent être rajoutées à l'extrémité de chacune des fourches. Ces jambes soulagent les fourches surtout lorsque la caisse chargée vient pour dépose. Un dispositif de verrouillage 39 du parallélisme des fourches par crochetage peut également être ajouté à l'extrémité de ces dernières.

Naturellement, de nombreuses variantes de réalisation peuvent entrer dans le cadre de l'invention.

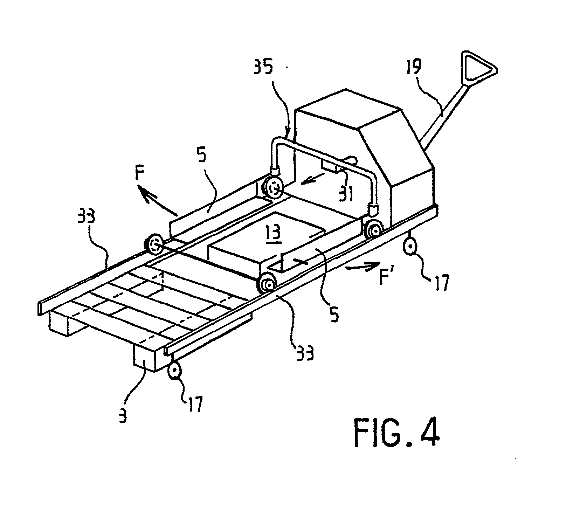

Ainsi, le socle peut êtrfe remplacé (figure 4) par deux longerons parallèles 33 encadrant la palette de manutention 3 posée cette fois au sol. Les longerons 33 constituent des rails de guidage pour un chariot 35 à galets mobiles en translation sur ces derniers, ledit chariot comprenant l'ensemble des deux fourches 5 support de la caisse à fond mobile articulées en rotation comme précédemment à ce dernier. Le chariot 35 est poussé par un moyen de transfert 31, par exemple un vérin hydraulique, au-dessus de la palette et la caisse est déposée comme précédemment sur cette dernière.

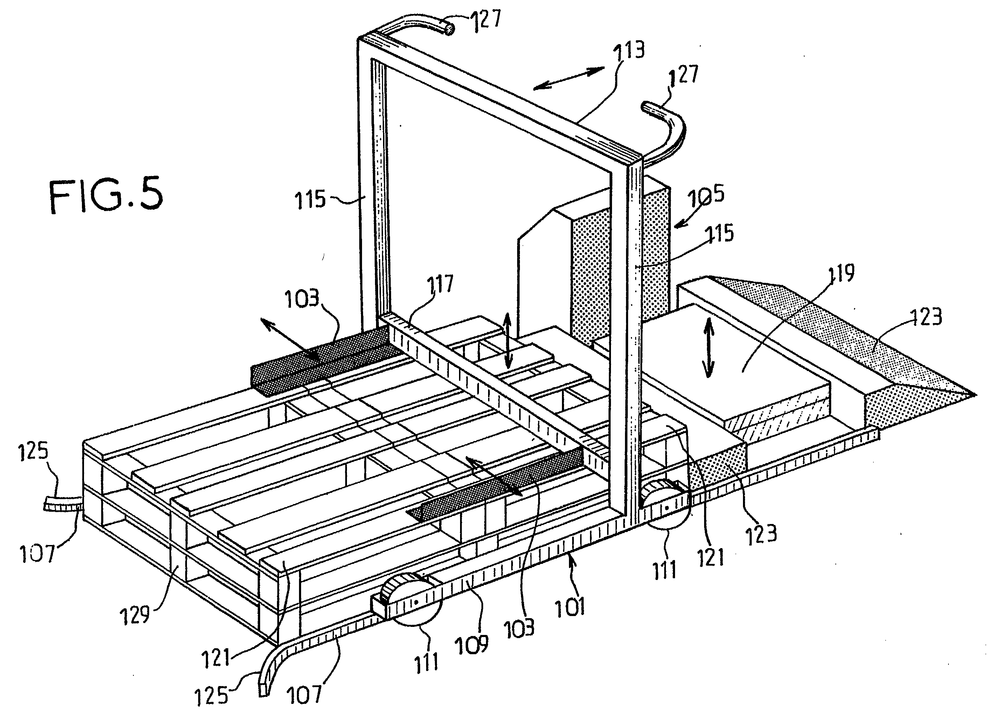

Selon la variante de réalisation de la figure 5, le dispositif de manutention de caisses comprend un ensemble-chariot 101 muni de fourches mobiles 103, un dispositif élévateur 105, et des rails de guidage latéraux 107. L'ensemble-chariot 101 est formé de deux longerons parallèles 109 munis de roulettes 111 à leur extrémité et reliés l'un à l'autre par un cadre rigide 113 à montants verticaux 115. Le cadre 113 comprend une traverse horizontale 117 portant lesdites fourches 103 supports des caisses. Comme mentionné précédemment, cette traverse 117 est mobile verticalement et les fourches 103 horizontalement sur cette traverse. Le plateau 119 du dispositif élévateur est placé à l'arrière des palettes de manutention 121 et entre deux marchepieds 123. Les rails 107 dont l'écartement correspond sensiblement à la largeur des palettes 121 maintiennent ces dernières en place, de même que les marchepieds 123 à l'arrière et permettent le guidage interne de l'ensemble-chariot 101 qui roule sur le sol. Les extrémités avant 125 de ces railes sont courbées vers l'extérieur.

Le fonctionnement de ce dispositif est très simple. Les palettes de manutention 121 sont d'abord introduites entre les rails 107, contre le premier marchepied 123. L'ensemble-chariot 101 est reculé avec ses fourches 103 à la verticale du plateau 119 du dispositif élévateur. Une caisse vide est posée sur les fourches puis son conditionnement à niveau constant est ensuite opéré par élévation concomitante du plateau 119 du dispositif élévateur. Lorsque la caisse est pleine, l'opérateur pousse vers l'avant l'ensemble-chariot 101 par ses poignées 127 en montant sur les marchepieds 123. Quand la caisse arrive à la verticale d'une palette vide 121, sa dépose peut être engagée. Il s'agit alors d'abaisser la traverse 117 de manière à ce que les fourches 103 affleurent le plan support de la palette, puis d'écarter simultanément ces dernières afin qu'elles se dégagent du fond de la caisse qui se pose alors en douceur sur la palette. L'ensemble-chariot est amené ensuite à la verticale du plateau élévateur 119 pour un nouveau cycle de conditionnement. La palette chargée de la caisse conditionnée peut alors être reprise du sol par un moyen de manutention classique tel qu'un chariot élévateur.

On notera que selon la course de translation permise à l'ensemble-chariot 101, plusieurs palettes indépendantes pourront être disposées adjacentes l'une à la suite de l'autre devant le plateau 119 du dispositif élévateur. Une sucession de caisses conditionnées pourront alors être stockées sur ces palettes. Dans l'exemple on a notamment représenté le cas de deux demi-palettes 121 supportées par une palette principale 129.

La présente invention apporte ainsi un dispositif de manutention simple et fiable des caisses à fond mobile et qui permet leur conditionnement à niveau constant et leur transfert sur des palettes classiques pour manutention ultérieure.

## Revendications

1.- Dispositif de manutention de caisses, notamment de caisses d'emballage à fond mobile, permettant un conditionnement des marchandises à niveau constant, qui comporte un socle (1) apte à supporter une palette de manutention (3), un dispositif élévateur (13) du fond mobile (11) de la caisse (7) pour le conditionnement à niveau constant et deux fourches (5) disposées au droit de ladite palette (3), à faible distance au-dessus de cette dernière, aptes à supporter la caisse (7) par ses bords inférieurs (9) de part et d'autre du dispositif élévateur (13), lesdites fourches (5) étant susceptibles de s'écarter latéralement pour se dégager des bords (9) de la caisse, de manière qu'elle se pose sur la palette (3) en vue de sa manutention ultérieure.

2.- Dispositif de manutention de caisses selon la revendication 1, caractérisé en ce qu'il est muni de roulettes (17) pour son déplacement.

3.- Dispositif de manutention de caisses selon l'une des revendications 1 et 2, caractérisé en ce que les fourches (5) sont mobiles en hauteur relativement au socle (1).

4.- Dispositif de manutention de caisses selon l'une des revendications précédentes, caractérisé en ce que les fourches (5) et le dispositif élévateur (13) forment un ensemble solidaire, mobile en hauteur, relativement au socle (1).

5.- Dispositif de manutention de caisses selon l'une des revendications précédentes, caractérisé en ce qu'il comprend un moyen de transfert (31) apte à pousser la caisse (7) le long des fourches (5) après conditionnement, de manière à éloigner cette dernière du dispositif élévateur (13) pour sa dépose sur la palette (3).

6.- Dispositif de manutention de caisses selon l'une des revendications 1 à 4, caractérisé en ce que le dispositif élévateur (13) est monté avec possibilité d'effacement automatique relativement à la palette (3), juste avant la dépose de la caisse (7) sur la palette.

7.- Dispositif de manutention de caisses selon l'une des revendications précédentes, caractérisé en ce que les fourches (5) sont articulées à chacune de leur extrémité proche du dispositif élévateur (13), leurs extrémités externes opposées s'écartant simultanément et symétriquement l'une de l'autre suivant un plan de rotation horizontal (flèches F, F').

8.- Dispositif de manutention de caisses selon l'une des revendications précédentes, caractérisé en ce que les fourches (5) ont une section en L avec base (21) tournée vers l'intérieur supportant ladite caisse.

9.- Dispositif de manutention de caisses selon la revendication 1, caractérisé en ce qu'il est intégré à une chaîne de convoyage, le socle (1) étant alors éliminé et les fourches (5) disposées parallèles le long miné et les fourches (5) disposées parallèles le long de la chaîne, déposant la caisse conditionnée directement sur cette dernière.

10.- Dispositif de manutention de caisses selon la revendication 1, caractérisé en ce que le socle est remplacé par deux longerons parallèles (33) encadrant la palette de manutention (3) posée au sol, lesdits longerons (33) formant rails de guidage pour un chariot (35) à galets, mobile en translation sur ce derniers, ledit chariot (35) comprenant l'ensemble desdites fourches (5) support de la caisse à fond mobile, articulées en rotation sur ce dernier, et étant mû en translation par un moyen de transfert classique (31) au-dessus de la palette de manière que la caisse soit déposée lors de l'ouverture de fourches sur cette dernière.

11.- Dispositif de manutention de caisses selon l'une quelconque des revendications précédentes, caractérisé en ce que des jambes latérales (37) munies de roulettes et un dispositif de verrouillage (39) du parallélisme des fourches par crochetage sont fixés à l'extrémité de ces dernières.

12.- Dispositif de manutention de caisses selon l'une des revendications précédentes, caractérisé en ce que le socle est remplacé par un ensemble-chariot (101) à deux longerons parallèles (109) munis de roulettes (111) reposant au sol, les longerons (109) encadrant la palette de manutention (121) posée également au sol, le dispositif élévateur. étant placé au sol, à l'arrière de la palette de manutention (121) et dans son plan médian.

13.- Dispositif de manutention de caisses selon la revendication 12, caractérisé en ce que lesdits longerons (109) sont solidaires l'un de l'autre par un cadre rigide (113) à deux montants verticaux (115) reliés par une traverse horizontale (117), laquelle porte les fourches (103).

14.- Dispositif de manutention de caisses selon l'une quelconque des revendications 12 et 13, caractérisé en ce que ladite traverse (117) est mobile verticalement.

15.- Dispositif de manutention de caisses selon l'une quelconque des revendications 12 à 14, caractérisé en ce qu'il est implanté en poste fixe sur son emplacement, prévu avec deux rainures parallèles formées au sol pour le roulement de l'ensemble-chariot, le dispositif élévateur étant fixé encastré au sol avec deux marchepieds (123) de part et d'autre, ces marchepieds (123) facilitant la manoeuvre de translation de l'ensemble-chariot (101) par l'opérateur (passage dessus).

16.- Dispositif de manutention de caisses selon l'une des revendications 12 à 15, caractérisé en ce qu'il comporte des rails de guidage (107) fixés parallèlement au sol, sensiblement à la largeur de la palette (121) et dont la distance externe permet le guidage interne du roulement de l'ensemble-chariot (101).

17.- Dispositif de manutention de caisses selon la revendication 16, caractérisé en ce que les extrémités avant (125) des rails sont courbées vers l'extérieur pour faciliter l'entrée et le placement des palettes (121) entre ces rails (107).

18.- Dispositif de manutention de caisses selon l'une quelconque des revendications 12 à 17, caractérisé en ce que suivant la course de translation de l'ensemble-chariot (1), il permet le stockage de plusieurs caisses déposées l'une à la suite de l'autre sur les palettes (121) placées adjacentes entre les rails (107).

**Patentansprüche**

1. Vorrichtung zum Fördern von Behältern, insbesondere Verpackungsbehältern mit beweglichem Boden, die eine Verpackung von Waren mit gleichbleibender Höhe gestatten, welche einen Sockel (1), der sich als Träger für eine Förderpalette (S) eignet, sowie eine Hebeeinrichtung (13) zum Anheben des beweglichen Bodens (11) des Verpackungsbehälters (7) zur Verpackung mit gleichbleibender Höhe, und zwei Gabeln (5) aufweist, die in gerader Linie zur Palette (3) in geringem Abstand über derselben angeordnet sind und sich als Träger für den Verpackungsbehälter (7) eignen, der beiderseits der Hebeeinrichtung (13) über seine Unterkanten (9) darauf aufliegt, wobei die Gabeln (5) seitlich so abspreizbar sind, daß sie sich von den Kanten (9) des Verpackungsbehälters in der Weise lösen, daß der Behälter zur Weiterbeförderung auf der Palette (3) aufliegt.

2. Vorrichtung zum Fördern von Behältern nach Anspruch 1, dadurch gekennzeichnet, daß sie zur Verlagerung Rollen (17) aufweist.

3. Vorrichtung zum Fördern von Behältern nach einem der Ansprüche 1 und 2, dadurch gekennzeichnet, daß die Gabeln bezüglich des Sockels (1) höhenverstellbar sind.

4. Vorrichtung zum Fördern von Behältern nach einem der vorhergehenden Ansprüche, dadurch gekennzeichnet, daß die Gabeln (5) zusammen mit der Hebeeinrichtung (13) eine bezüglich des Sockels (1) höhenverstellbare und fest verbundene Einheit bilden.

5. Vorrichtung zum Fördern von Behältern nach einem der vorhergehenden Ansprüche, dadurch gekennzeichnet, daß sie eine Übertragungseinrichtung (31) aufweist, welche nach dem Verpacken den Verpackungsbehälter (7) entlang der Gabeln (5) in der Weise verschieben kann, daß zum Absetzen auf der Palette (3) der Abstand zwischen dem Verpackungsbehälter und der Hebeeinrichtung (13) vergrößert wird.

6. Vorrichtung zum Fördern von Behältern nach einem der Ansprüche 1 bis 4, dadurch gekennzeichnet, daß die Hebeeinrichtung (13) so angebracht ist, daß die Möglichkeit zur automatischen Rückstellung bezüglich der Palette (3) kurz vor dem Absetzen des Verpackungsbehälters (7) auf der Palette gegeben ist.

7. Vorrichtung zum Fördern von Behältern nach einem der vorhergehenden Ansprüche, dadurch gekennzeichnet, daß die Gabeln (6) an jedem ihrer der Hebeeinrichtung (13) benachbarten Enden angelenkt sind, wobei sich ihre gegenüberliegenden äußeren Enden gleichzeitig und zueinander symmetrisch in einer horizontalen Drehebene (Pfeile F, F') auseinanderspreizen.

8. Vorrichtung zum Fördern von Behältern nach einem der vorhergehenden Ansprüche, dadurch gekennzeichnet, daß die Gabeln (5) ein L-förmiges Profil aufweisen, dessen Basis (21) einwärts gekehrt ist und dabei den Behälter abstützt.

9. Vorrichtung zum Fördern von Behältern nach Anspruch 1, dadurch gekennzeichnet, daß sie in eine Transportkette integriert ist, wobei der Sockel (1) in diesem Fall entfällt und die Gabeln (5) parallel in Längsrichtung der Kette angeordnet sind, während der Behälter nach der Verpackung direkt auf der Kette abgesetzt wird.

10. Vorrichtung zum Fördern von Behältern nach Anspruch 1, dadurch gekennzeichnet, daß statt des Sockels zwei parallele Längsträger (33) vorgesehen sind, welche die auf dem Boden abgesetzte Förderpalette (3) umschließen und Führungsschienen für einen auf Rollen laufenden und auf den Schienen fahrbaren Schlitten (35) bilden, wobei der Schlitten (35) die gesamte Anordnung der als Träger für den Behälter mit beweglichem Boden dienenden Gabeln (5) umfaßt, die drehbeweglich auf dem Schlitten angelenkt sind und mit Hilfe einer herkömmlichen Übertragungseinrichtung (31) über der Palette in der Weise verfahrbar sind, daß der Behälter auf den Gabeln abgesetzt wird, wenn sich diese öffnen.

11. Vorrichtung zum Fördern von Behältern nach einem der vorhergehenden Ansprüche, dadurch gekennzeichnet, daß seitliche Schenkel (37), die mit Rollen versehen sind, und eine Verriegelungseinrichtung (39) welche die Gabeln durch einen Hakenmechanismus in paralleler Ausrichtung sichert, am Ende der Gabeln befestigt sind.

12. Vorrichtung zum Fördern von Behältern nach einem der vorhergehenden Ansprüche, dadurch gekennzeichnet, daß statt des Sockels eine Schlitteneinheit (101) mit zwei parallelen Längsträgern (109) vorgesehen ist, welche auf dem Boden aufliegende Rollen (111) aufweisen und die ebenfalls auf dem Boden aufliegende Förderpalette (121) umschließen, wobei die Hebeeinrichtung auf dem Boden hinter der Förderpalette (121) in deren Mittelebene steht.

13. Vorrichtung zum Fördern von Behältern nach Anspruch 12, dadurch gekennzeichnet, daß die Längsträger (109) über einen steifen Rahmen (113) mit zwei vertikalen Stützen (115) fest miteinander verbunden sind, wobei die Stützen über einen horizontalen Querträger (117) verbunden sind, welcher die Gabeln (103) trägt.

14. Vorrichtung zum Fördern von Behältern nach einem der Ansprüche 12 und 13, dadurch gekennzeichnet, daß der Querträger (117) vertikal beweglich ist.

15. Vorrichtung zum Fördern von Behältern nach einem der Ansprüche 12 bis 14, dadurch gekennzeichnet, daß sie an ihrem Aufstellort ortsfest installiert ist, daß auf dem Boden zwei parallele Längsvertiefungen zum Verfahren der Schlitteneinheit ausgebildet sind, und daß die Hebeeinrichtung zwei beiderseits angeordnete Trittbretter (123) aufweist und fest am Boden verankert ist, wobei diese Trittbretter (123) die Verschiebung der Schlitteneinheit (101) durch das Bedienungspersonal (Durchgang auf einer Brücke) vereinfachen.

16. Vorrichtung zum Fördern von Behältern nach einem der Ansprüche 12 bis 15, dadurch gekennzeichnet, daß sie parallel zum Boden befestigte Führungsschienen (107) aufweist, die im wesentlichen der Breite der Palette (121) entsprechen, während ihr Außenabstand die Innenführung beim Verfahren der Schlitteneinheit (101) gestattet.

17. Vorrichtung zum Fördern von Behältern nach Anspruch 16, dadurch gekennzeichnet, daß die vorderen Enden (125) der Schienen zur Vereinfachung des Eintritts und der Anordnung der Paletten zwischen diesen Schienen (107) nach außen umgebogen sind.

18. Vorrichtung zum Fördern von Behältern nach einem der Ansprüche 12 bis 17, dadurch gekennzeichnet, daß entlang des Verschiebewegs der Schlitteneinheit (1) die Lagerung mehrerer Behälter möglich ist, welche nacheinander auf den nebeneinander zwischen den Schienen (107) befindlichen Paletten (121) abgesetzt werden.

## Claims

1. A case handling device, especially for packing cases with a movable bottom, enabling packaging of the goods at a constant level, said case handling device comprising a base (1) capable of supporting a handling pallet (3), a device (13) for elevating the movable bottom (11) of the case (7) for packaging at a constant level and two fork prongs (5) arranged opposite said pallet (3) at a short distance above the latter, capable of supporting the case (7) by its lower edges (9) on each side of the elevator device (13), said prongs (5) being capable of separating laterally to disengage the edges (9) of the case, in such a way that it positions itself on the pallet (3) for its subsquent handling.

2. A case handling device according to claim 1, characterized in that it is provided with castors (17) for its displacement.

3. A case handling device according to either one of claims 1 or 2, characterized in that the prongs (5) are height-adjustable with respect to the base (1).

4. A case handling device according to any one of the preceding claims, characterized in that the prongs (5) and the elevator device (13) form an integral assembly which is height-adjustable with respect to the base (1).

5. A case handling device according to any one of the preceding claims, characterized in that it comprises a transfer means (31) capable of pushing the case (7) along the prongs (5) after packaging, in such a way as to distance the latter from the elevator device (13) for its deposit on the pallet (3).

6. A case handling device according to any one of claims 1 to 4, characterized in that the elevator device (13) is mounted with the possibility of automatic withdrawal with respect to the pallet (3) just before the deposit of the case (7) on the pallet.

7. A case handling device according to any one of the preceding claims, characterized in that the prongs (5) are hinged at each of their ends near the elevator device (13), their opposite outer ends moving apart simultaneously and symmetrically one with the other in accordance with a horizontal plane of rotation (arrows F, F').

8. A case handling device according to any one of the preceding claims, characterized in that the prongs (5) have an L-shaped section with the base (21) turned inwards supporting said case.

9. A case handling device according to claim 1, characterized in that it is integral with a conveyer chain, the base (1) then being eliminated and the prongs (5) being arranged parallel along the chain and depositing the packed case directly onto said chain.

10. A case handling device according to claim 1, characterized in that the base is replaced by two parallel longitudinal members (33) framing the handling pallet (3) placed on the ground, said longitudinal members (33) forming guide rails for a carriage (35) with rollers and capable of translational motion on the latter, said carriage (35) comprising the assembly of said prongs (5) for supporting the movable-bottomed case and rotationally hinged thereto, and being moved in translational motion by a conventional transfer means (31) above the pallet in such a way that the case is deposited when the prongs open thereon.

11. A case handling device according to any one of the preceding claims, characterized in that lateral legs (37) provided with castors and a device (39) for bolting the prongs in parallel by hooking are fixed to the end thereof.

12. A case handling device according to any one of the preceding claims, characterized in that the base is replaced by a carriage assembly (101) with two parallel longitudinal members (109) provided with castors (111) resting on the ground, the longitudinal members (109) framing the handling pallet (121) likewise positioned on the ground, the elevator device being placed on the ground at the rear of the handling pallet (121) and in its median plane.

13. A case handling device according to claim 12, characterized in that said longitudinal members (109) are firmly connected to each other by a rigid frame (113) with two vertical members (115) connected by a horizontal cross-bar (117) which carries the prongs (103).

14. A case handling device according to either one of claims 12 or 13, characterized in that said cross-bar (117) is vertically movable.

15. A case handling device according to any one of claims 12 to 14, characterized in that it is placed in a fixed position at its location and provided with two parallel grooves formed in the ground for the rolling movement of the carriage assembly, the elevator device being fixedly embedded in the ground with a running board (123) on each side, these running boards (123) facilitating the translational manœuvre of the carriage assembly (101) by the operator (passage over).

16. A case handling device according to any one of claims 12 to 15, characterized in that it comprises parallel guide rails (107) fixed to the ground, separated by substantially the width of the pallet (121) and of which the external separation permits internal guidance of the rolling of the carriage assembly (101).

17. A case handling device according to claim 16, characterized in that the front ends (125) of the rails are curved outwards to facilitate entry and positioning of the pallets (121) between these rails (107).

18. A case handling device according to any one of claims 12 to 17, characterized in that, in accordance with the translational course of the carriage assembly (1), it permits storage of several cases deposited one after the other on the pallets (121) placed adjacent each other between the rails (107).

FIG. 1

FIG. 2

FIG. 3

FIG. 4

FIG.5